Europäisches Patentamt

European Patent Office

Office européen des brevets

(11) Veröffentlichungsnummer : **0 025 487**
**B1**

(12) **EUROPÄISCHE PATENTSCHRIFT**

(45) Veröffentlichungstag der Patentschrift :
**03.11.82**

(51) Int. Cl.³ : **C 08 G 69/40, C 08 G 69/44**

(21) Anmeldenummer : **80104066.8**

(22) Anmeldetag : **14.07.80**

(54) Verfahren zur Herstellung von Polyether(ester)amiden.

(30) Priorität : **13.09.79 DE 2936976**

(43) Veröffentlichungstag der Anmeldung :
**25.03.81 (Patentblatt 81/12)**

(45) Bekanntmachung des Hinweises auf die Patenterteilung : **03.11.82 Patentblatt 82/44**

(84) Benannte Vertragsstaaten :
**BE CH FR GB IT LI NL**

(56) Entgegenhaltungen :
**CH A 438 725**
**DE A 2 523 991**

(73) Patentinhaber : **CHEMISCHE WERKE HÜLS AG**
**Postfach 1320**
**D-4370 Marl 1 (DE)**

(72) Erfinder : **Mumcu, Salih, Dr.**
**Bitterfelder Strasse 9 a**
**D-4370 Marl (DE)**

Imprimerie Jouve, 18, rue St-Denis, 75001 Paris, France

## Verfahren zur Herstellung von Polyether(ester)amiden

Die Herstellung von Polyether(ester)amiden bzw. Polyesteramiden ist grundsätzlich bekannt.

So werden folgende Arbeitsweisen beschrieben:

Polykondensation polyamidbildender Monomerer, wie Lactame, ω-Aminocarbonsäuren oder äquivalenter Mengen von Dicarbonsäuren und Diaminen mit einem Polyether mit endständigen Aminogruppen in Gegenwart von Dicarbonsäuren oder mit einem Polyether mit endständigen Carboxylgruppen in Gegenwart von Diaminen; Polykondensation eines Polyethers mit Polyamidoligomeren, die entweder Carboxylendgruppen oder Aminoendgruppen tragen (DE-AS 17 19 235, Spalte 4; DE-OS 25 23 991; DE-OS 27 12 987; FR-PS 1 444 437; DE-OS 26 58 714).

Polyether und Polyamide sind bekanntlich nicht miteinander verträglich. Wegen der Heterogenität der Reaktionsmasse verläuft die Polykondensation sehr langsam. Außerdem gelangt man nur zu Formmassen mit hohem Extraktgehalt und relativ niedriger Molmasse, so daß keine ausreichend stabile Formkörper erhalten werden können, wie sie nach dem Spritzguß- und insbesondere Extrusionsverfahren hergestellt werden.

Die deutsche Patentanmeldung P 29 32 234.7 beschreibt ein Verfahren ausgehend von endgruppentragenden Polyamiden und endgruppentragenden Polyethern, wobei man unter Zwischenschalten einer Druckstufe unter Wasserdampfdruck eine Homogenisierung erreichen kann und somit in kürzeren Reaktionszeiten zu Polyether(ester)amiden mit hohem Molgewicht gelangen kann, die sich vorteilhaft zu Formkörpern verarbeiten lassen.

Aus der DE-OS 27 12 987 ist ebenfalls ein Verfahren bekannt, wobei man ausgehend von den monomeren polyamidbildenden Verbindungen, Dicarbonsäuren und Polyetherglykolen unter Anwenden von Druck in Gegenwart von Wasser zu hochmolekularen Polyether(ester)amiden gelangen kann.

Es ist auch bekannt, Polyether(ester)amide ohne Druckanwendung herzustellen. Dabei wird die Öffnung der Lactamringe in Gegenwart von Dicarbonsäuren und Diol oder Oligoetherdiolen oder Oligoetherestern vorgenommen (ausgelegte Unterlagen der deutschen Patentanmeldung P 11 24, 39 c-10; DE-OS 21 35 770, Beispiel; DD-PS 87 888). Die auf diese Weise erhaltenen Produkte enthalten jedoch trotz langer Ankondensationszeit von bis zu 24 Stunden noch zu viel unumgesetztes Lactammonomer. Ihre Molmassen sind so niedrig, daß sie nicht geeignet sind zur Herstellung von Formkörpern nach dem Extrusionsverfahren.

Aufgabe der Erfindung ist es, ein Verfahren bereitzustellen, welches das Anwenden von Druck vermeidet und das trotzdem erlaubt, in kurzen Reaktionszeiten zu hochmolekularen thermoplastischen Polyetheramiden bzw. Polyether(ester)amiden zu gelangen.

Die Lösung der Aufgabe gelingt dadurch, daß man zunächst unter einer Inertgasatmosphäre unter Normaldruck in Abwesenheit von Wasser ein Gemisch aus Lactamen mit mindestens 8 Kohlenstoffatomen und Dicarbonsäuren im Molverhältnis 100 : 7 bis 100 : 120 bei Temperaturen von 230 bis 300 °C unter mechanischer Durchmischung aufschmilzt bis die Lactame zu mindestens 99 % umgesetzt sind, anschließend den hydroxyl- und/oder aminoendgruppentragenden Polyether im Molverhältnis 1 : 0,95 bis 1 : 1,05 zu den Dicarbonsäuren zusetzt und unter weiterer mechanischer Durchmischung bei 230 bis 290 °C homogenisiert und schließlich die Polykondensation bei 250 bis 290 °C zu Ende führt.

Es gelingt demnach nur bei Einhalten einer bestimmten Reihenfolge in Verbindung mit bestimmten Mischungsverhältnissen und der Auswahl bestimmter höherer Lactame zum Erfolg zu gelangen. Es kann also die hydrolytische Polymerisation in Gegenwart von Wasser unter Druck vermieden werden. Die Ringöffnung der höhergliedrigen Lactame gelingt überraschenderweise schnell und hinreichend vollständig in Abwesenheit von Wasser allein in Gegenwart der Dicarbonsäuren.

Die im folgenden als acyclolitische Ringöffnung der Lactame bezeichneten Stufe kann in üblicher Weise mit Hilfe von Katalysatoren beschleunigt werden. Als Katalysatoren eignen sich Phosphorsäure oder deren Aminsalze, Zinkacetat und Calciumacetat in Mengen 0,01 bis 0,3 Gewichtsprozent, bezogen auf alle Reaktionsteilnehmer. Bevorzugt wird Phosphorsäure in Mengen von 0,02 bis 0,1 Gewichtsprozent. Die einsetzbaren geringen Mengen bewirken keine Verschlechterung der Hydrolysestabilität. Die anzuwendende Katalysatormenge wird umso niedriger, je kleiner das Molverhältnis Lactam : Dicarbonsäure ist.

Vorteilhaft beträgt das Molverhältnis Lactame : Dicarbonsäuren 100 : 10 bis 100 : 60, insbesondere 100 : 15 bis 100 : 30.

Geeignete Lactame mit mindestens 8 Kohlenstoffatomen sind z.B. Capryllactam, Laurinlactam oder ihre Mischungen. Vorzugsweise wird Laurinlactam eingesetzt.

Geeignete Dicarbonsäuren sind lineare aliphatische Dicarbonsäuren der allgemeinen Formel HOOC—$(CH_2)_x$—COOH, in der x einen Wert zwischen 4 und 11 darstellen kann, und/oder verzweigte aliphatische Dicarbonsäuren. Beispielsweise seien genannt: Adipinsäure, Trimethyladipinsäure, Pimelinsäure, Korksäure, Azelainsäure, Sebacinsäure, Decandicarbonsäure. Ferner können cycloaliphatische und/oder aromatische Dicarbonsäuren mit mindestens 8 Kohlenstoffatomen, wie z.B. Hexahydroterephthalsäure, Terephthalsäure, Isophthalsäure, Phthalsäure oder Naphthalindicarbonsäure zum Einsatz kommen. Bevorzugt werden Decandicarbonsäure und Isophthalsäure.

Geeignete Polyether sind vom Ethylenoxid, Propylenoxid und Tetrahydrofuran abzuleiten. Die Polyether können Homo- und/oder Copolymere sein. Auch Gemische von Homo- und/oder Copolymeren können eingesetzt werden. Ihre zahlenmittleren Molmassen bewegen sich zwischen 160 und 3 000, vorzugsweise zwischen 300 und 2 200, insbesondere zwischen 500 und 1 200. Sie enthalten als Endgruppen OH- und/oder $NH_2$-Gruppen. Bevorzugt wird Polytetrahydrofuran mit OH-Endgruppen eingesetzt. Die Herstellung von Polyethern mit $NH_2$-Endgruppen kann nach bekannten Verfahren z.B. gemäß DE-OS 15 70 542, DE-OS 24 12 056, DE-OS 24 12 057 und US-PS 2 401 607 erfolgen.

Die Herstellung der Polyetheramide bzw. Polyether(ester)amide erfolgt zweckmäßigerweise in einem Rührkessel. Die Lactamringe werden unter $N_2$-Abdeckung bei 230 bis 300 °C, vorzugsweise 250 bis 290 °C in Gegenwart der Dicarbonsäuren, geöffnet und polymerisiert. Um einen besseren Luftausschluß zu gewährleisten, kann bei $N_2$-Überdrücken bis 0,5 bar gearbeitet werden. Die Ringöffnung dauert maximal 5 Stunden. In Gegenwart von Phosphorsäure reicht eine Zeit von 15 Minuten bis 2 Stunden aus. In dieser Zeit werden die Lactammonomeren bis zu 99,0 bis 99,7 % umgesetzt.

Die Polyether werden im Temperaturbereich von 230 bis 290 °C, vorzugsweise äquimolar zu den Dicarbonsäuren, dem Reaktionsprodukt aus Lactamen und Dicarbonsäuren zugesetzt und die Mischung 1/2 bis 2 Stunden homogenisiert.

Die Polykondensation wird anschließend unter Rühren zwischen 250 und 290 °C, vorzugsweise zwischen 260 und 280 °C, bei Normaldruck unter $N_2$-Überleiten oder im Vakuum zwischen 100 und 1 mbar, vorzugsweise 90 und 5 mbar, zu Ende geführt.

Die gewünschten relativen Lösungsviskositäten der erhaltenen Polyetheramide und Polyether(ester)amide liegen zwischen 1,4 und 2,4, bevorzugt zwischen 1,6 und 2,2, gemessen nach DIN 53 727 in m-Kresol bei 25 °C.

Polyetheramide und Polyether(ester)amide können Zusatzstoffe, wie Stabilisatoren gegen Licht- und thermooxidativen Abbau, Flammschutzmittel, Farbstoffe, Pigmente, Weichmacher, Verarbeitungshilfsmittel und Füllstoffe enthalten, die vorher, während oder nach der Polykondensation zugegeben werden.

Die Polyetheramide und Polyether(ester)amide entsprechen in der Farbe und in den Eigenschaften den bereits bekannten, durch hydrolytische Ringöffnung hergestellten Produkten. Sie sind zur Herstellung von Formkörpern mit hoher Schlagzähigkeit bei tiefen Temperaturen, wie Rohren, Filmen und Folien nach Spritzgieß- oder Extrusionsverfahren geeignet.

Die Erfindung ist nachstehend anhand von Ausführungsbeispielen näher erläutert:

Die Lactamgehalte wurden gaschromatographisch bestimmt. Die angegebenen Molmassen stellen zahlenmittlere Molmassen dar.

Vergleichsbeispiel 1 (entsprechend dem Verfahren aus DE-OS 21 35 770)

19,7 kg Laurinlactam (100 Mol), 11,14 kg Polyetherester aus 1,46 kg Adipinsäure (10 Mol), 10 kg Polyethylenglykol mit der Molmasse 1 000 (10 Mol) und 30 g Phosphorsäure wurden in einem 50 1-Reaktor 15 Stunden auf 280 °C erhitzt. Dann wurde bei 260 °C 5 Stunden $N_2$ übergeleitet (200 l/h) und 6 Stunden ein Vakuum von 1 mbar angelegt. Dabei wurden 9 % des eingesetzten Lactams zurückgewonnen. Das erhaltene braune und spröde Material wies einen $\eta_{rel}$-Wert von 1,45 auf.

Beispiel 1

19,7 kg Laurinlactam (100 Mol), 1,46 kg Adipinsäure (10 Mol) und 30 g Phosphorsäure wurden in einem 50 1-Rührkessel 3 Stunden auf 280 °C erhitzt, 10 kg Polyethylenglykol mit der Molmasse 1 000 hinzugegeben und eine Stunde verrührt. Bei 260 °C wurde 5 Stunden $N_2$ übergeleitet (200 l/h) und 6 Stunden ein Vakuum von 1 mbar angelegt. Es wurde kein Laurinlactam zurückgewonnen. Das erhaltene Material gelber Farbe ist nicht spröde. Es weist einen $\eta_{rel}$-Wert von 1,65 und einen Laurinlactamgehalt von 0,1 Gewichtsprozent auf.

Beispiel 2

19,7 kg Laurinlactam (100 Mol) und 3,45 kg Decandicarbonsäure (15 Mol) wurden in einem 100 1-Rührkessel unter $N_2$ 2 Stunden auf 280 °C erhitzt, dann 15,5 kg $\alpha,\omega$-Dihydroxy-(polytetrahydrofuran) mit der Molmasse 1 000 (15,5 Mol) hinzugegeben und eine Stunde gerührt. Bei 270 °C wurde 5 Stunden $N_2$ übergeleitet (200 l/h) und 8 Stunden ein Vakuum von 90 mbar angelegt. Das erhaltene stark flexible Produkt wies einen Lactamgehalt von 0,03 Gewichtsprozent und einen $\eta_{rel}$-Wert von 1,7 auf.

Beispiel 3

Hierbei wurde genau so verfahren, wie unter Beispiel 4 beschrieben, jedoch wurde die Ringöffnung in Gegenwart von 7,7 g Phosphorsäure innerhalb von einer Stunde durchgeführt. Das erhaltene Polymer hatte einen $\eta_{rel}$-Wert von 2,1. Es enthielt noch 0,02 Gewichtsprozent Laurinlactam.

Beispiel 4

19,7 kg Laurinlactam (100 Mol) und 5,75 kg Decandicarbonsäure (25 Mol) wurden unter Stickstoff in einem 100 1-Rührkessel 2 Stunden auf 280 °C erhitzt. (Das entstandene Vorpolymerisat enthielt 0,4 Gewichtsprozent Laurinlactam). 26 kg $\alpha,\omega$-Dihydroxy-(polytetrahydrofuran) der Molmasse 1 000 (26 Mol) und 15,4 kg Phosphorsäure wurden hinzugegenben und eine

Stunde verrührt. Die Polykondensation erfolgte bei 270 °C zunächst in 5 Stunden unter $N_2$-Überleiten, dann innerhalb von 8 Stunden unter einem Vakuum von 90 mbar. Das erhaltene Produkt wies einen $\eta_{rel}$-Wert von 2,1 auf.

**Beispiel 5**

Es wurde wie in Beispiel 6 verfahren, jedoch wurde die Ringöffnung bei 250 °C innerhalb von 4 Stunden durchgeführt (Lactamgehalt des Vorpolymerisats 0,38 Gewichtsprozent). Das Polyether(ester)amid wies die gleiche relative Lösungsviskosität (2,1) auf.

**Beispiel 6**

14,1 kg Capryllactam (100 Mol) und 2,49 kg Isophthalsäure (15 Mol) wurden unter Stickstoff in einem 50 1-Rührkessel 4 Studen auf 280 °C erhitzt. (Das entstandene Vorpolymerisat enthielt 0,28 Gewichtsprozent Capryllactam). 15,5 kg $\alpha$,$\omega$-Dihydroxy-(polytetrahydrofuran) mit der Molmasse 1 000 (15,5 Mol) wurden hinzugegeben und eine Stunde gerührt. Bei 270 °C wurde 5 Stunden $N_2$ übergeleitet (100 l/h) und 8 Stunden ein Vakuum von 90 mbar angelegt. Das erhaltene farblose Polymer wies eine relative Lösungsviskosität von 1,73 auf.

**Beispiel 7**

7,05 kg Capryllactam (50 Mol), 9,85 kg Laurinlactam (50 Mol), 7,53 kg Azelainsäure (40 Mol) und 32 g Phosphorsäure wurden in einem 100 1-Rührkessel unter $N_2$ 40 Minuten auf 280 °C erhitzt. (Das entstandene Vorpolymerisat enthielt 0,22 Gewichtsprozent Larinlactam und 0,14 Gewichtsprozent Capryllactam). 26,5 kg $\alpha$,$\omega$-Dihydroxy-(polytetrahydrofuran) mit der Molmasse 650 (40,8 Mol) wurden hinzugegeben und eine Stunde verrührt. Bei 270 °C wurde 2 Stunden $N_2$ übergeleitet und 7 Stunden ein Vakuum von 20 mbar angelegt.

Das erhaltene Polymer wies eine relative Lösungsviskosität von 1,92 auf.

**Beispiel 8**

19,7 kg Laurinlactam (100 Mol) und 4,6 kg Decandicarbonsäure (20 Mol) wurden in einem 100 1-Rührkessel unter $N_2$ 90 Minuten auf 280 °C erhitzt. (Das entstandene Vorpolymerisat wies einen Lactamgehalt von 0,38 Gewichtsprozent auf). 22 kg Polytetrahydrofuran-diamin mit der Molmasse 1 100 (20 Mol) wurden hinzugegeben und 30 Minuten eingerührt ; dabei wurde die Temperatur auf 265 °C zurückgenommen. Die Reaktionsmasse wurde anschließend unter $N_2$-Überleiten (200 l/h) 5 Stunden polykondensiert. $\eta_{rel}$-Wert des erhaltenen Polyetheramids : 1,95.

**Beispiel 9**

10,575 kg Capryllactam (75 Mol) und 6,9 kg Decandicarbonsäure (30 Mol) wurden unter $N_2$ in einem 100 1-Rührkessel eine Stunde auf 280 °C erhitzt. (Das Vorpolymerisat wies einen Capryllactamgehalt von 0,18 Gewichtsprozent auf). 33 kg Polytetrahydrofuran-diamin mit der Molmasse 1 100 (30 Mol) wurden hinzugegeben und 20 Minuten eingerührt. Die Reaktionsmasse wurde bei 270 °C unter $N_2$-Überleiten (200 l/h) 6 Stunden polykondensiert. $\eta_{rel}$-Wert des erhaltenen Polyetheramids : 1,90.

**Ansprüche**

1. Verfahren zur Herstellung von thermoplastischen Polyetheramiden bzw. Polyether(ester)amiden aus Lactamen, Dicarbonsäuren und Hydroxylendgruppen und/oder amino-endgruppentragenden Polyethern, dadurch gekennzeichnet, daß man zunächst unter einer Inertgasatmosphäre unter Normaldruck in Abwesenheit von Wasser ein Gemisch aus Lactamen mit mindestens 8 Kohlenstoffatomen und Dicarbonsäuren im Molverhältnis 100 : 7 bis 100 : 120 bei Temperaturen von 230 bis 300 °C unter mechanischer Durchmischung aufschmilzt bis die Lactame zu mindestens 99 % umgesetzt sind, anschließend den hydroxyl- und/oder aminoendgruppentragenden Polyether im Molverhältnis 1 : 0,95 bis 1 : 1,05 zu den Dicarbonsäuren zusetzt und unter weiterer mechanischer Durchmischung bei 230 bis 290 °C homogenisiert und schließlich die Polykondensation bei 250 bis 290 °C zu Ende führt.

2. Verfahren nach Anspruch 1, dadurch gekennzeichnet, daß Lactame und Dicarbonsäuren im Molverhältnis 100 : 10 bis 100 : 60 eingesetzt werden.

3. Verfahren nach Anspruch 1, dadurch gekennzeichnet, daß Lactame und Dicarbonsäuren im Molverhältnis 100 : 15 bis 100 : 30 eingesetzt werden.

4. Verfahren nach den Ansprüchen 1 bis 3, dadurch gekennzeichnet, daß als Lactam Laurinlactam und als hydroxylendgruppentragender Polyether $\alpha$,$\omega$-Dihydroxy-(polytetrahydrofuran) eingesetzt werden.

5. Verfahren nach des Ansprüche 1 bis 4, dadurch gekennzeichnet, daß als Katalysator für die Umsetzung der Lactame 0,02 bis 0,1 Gewichtsprozent Phosphorsäure eingesetzt werden.

**Claims**

1. A process for the production of a thermoplastic polyetheramide or polyether(ester)amide from a lactam, a dicarboxylic acid and a polyether having hydroxyl and/or amine end groups, characterised in that firstly a mixture of a lactam of at least 8 carbon atoms and a dicarboxylic acid in a molar ratio of from 100 : 7 to 100 : 120 is melted down at a temperature of 230 to 300 °C with mechanical admixing until at least 99 % of the lactam has been converted, the melting down being carried out under an inert gas atmosphere at atmospheric pressure in the absence of water, then the polyether having hydroxyl and/or amino end groups is introduced, in a molar ratio of 1 : 0,95 to 1 : 1,05 to the dicarboxylic acid, and the mixture is homogenised at 230 to 290 °C with further mechanical admixing, and subsequently the polycondensation is carried to its conclusion at 250 to 290 °C.

2. A process according to claim 1, characterised in that the lactam and dicarboxylic acid are employed in a molar ratio of 100 : 10 to 100 : 60.

3. A process according to claim 1, characterised in that the lactam and dicarboxylic acid are employed in a molar ratio of 100 : 15 to 100 : 30.

4. A process according to any of claims 1 to 3, characterised in that laurolactam is used as the lactam and $\alpha,\omega$-dihydroxy-(polytetrahydrofuran) is used as the polyether having hydroxyl end groups.

5. A process according to any of claims 1 to 4, characterised in that 0.02 to 0.1 percent by weight of phosphoric acid is used as catalyst for conversion of the lactam.

**Revendications**

1. Procédé de préparation de polyétheramides ou polyéther(ester)amides thermoplastiques en partant de lactames, d'acides dicarboxyliques et de polyéthers portant des groupes terminaux hydroxyle et/ou des groupes terminaux amine, caractérisé par le fait que l'on fait fondre, avec brassage mécanique, à des températures de 230 à 300 °C, sous une atmosphère de gaz inerte, à la pression normale, en l'absence d'eau, un mélange de lactames comportant au moins 8 atomes de carbone et d'acides dicarboxyliques dans un rapport molaire compris entre 100 : 7 et 100 : 120 jusqu'à ce que les lactames aient réagi à raison d'au moins 99 %, qu'on ajoute ensuite le polyéther portant des groupes terminaux hydroxyle et/ou amine dans un rapport molaire compris entre 1 : 0,95 et 1 : 1,05 relativement aux acides dicarboxyliques et qu'on les homogénéise entre 230 et 290 °C en continuant le brassage mécanique et qu'enfin, on conduit la polycondensation à l'achèvement entre 250 et 290 °C.

2. Procédé selon la revendication 1, caractérisé par le fait que l'on introduit des lactames et des acides dicarboxyliques dans un rapport molaire compris entre 100 : 10 et 100 : 60.

3. Procédé selon la revendication 1, caractérisé par le fait que l'on introduit des lactames et des acides dicarboxyliques dans un rapport molaire compris entre 100 : 15 et 100 : 30.

4. Procédé selon les revendications 1 à 3, caractérisé par le fait que, comme lactame, on utilise le laurolactame et que, comme polyéther portant des groupes terminaux hydroxyle, on utilise l'alpha, oméga-dihydroxy-(polytétrahydrofuranne).

5. Procédé selon les revendications 1 à 4, caractérisé par le fait que, comme catalyseur pour la conversion des lactames, on utilise de 0,02 à 0,1 % en poids d'acide phosphorique.